# EUROPÄISCHE PATENTSCHRIFT

(11) **EP 3 442 851 B1**
(45) Veröffentlichungstag und Bekanntmachung des Hinweises auf die Patenterteilung: **06.07.2022**
(21) Anmeldenummer: 17715109.9
(22) Anmeldetag: 31.03.2017
(51) Int. Cl.: B62D 25/08, B62D 27/06

(54) **ANORDNUNG EINER BEFESTIGUNGSSTRUKTUR AN EINEM STRUKTURBAUTEIL EINES KRAFTFAHRZEUGES MIT EINEM FASEREINLEGEELEMENT**
ARRANGEMENT OF A FASTENING STRUCTURE ON A STRUCTURAL COMPONENT OF A MOTOR VEHICLE WITH A FIBRE INLAY ELEMENT
AGENCEMENT D'UNE STRUCTURE DE FIXATION SUR UN ÉLÉMENT STRUCTURAL D'UN VÉHICULE AUTOMOBILE MUNI D'UN ÉLÉMENT D'INSERTION À BASE DE FIBRES

(30) Priorität: 13.04.2016 DE 102016206125
(43) Veröffentlichungstag der Anmeldung: 20.02.2019
(73) Patentinhaber: Volkswagen Aktiengesellschaft, 38440 Wolfsburg (DE)
(72) Erfinder: IPPOLITI, Mario, 38444 Wolfsburg (DE); SCHORN, Tomas, 38446 Wolfsburg (DE); DENEKE, Lutz, 38551 Vollbüttel (DE); STROTHMANN, Michael, 49082 Osnabrück (DE); MÖHLE, Dr. Enrico, 38179 Schwülper (DE); HÄUSLER, Dr. Sascha, 38179 Schwülper (DE); LENZ, Michael, 38536 Meinersen (DE); KRÖMER, Sonja, 49078 Osnabrück (DE)
(86) Internationale Anmeldenummer: PCT/EP2017/057678
(87) Internationale Veröffentlichungsnummer: WO 2017/178247

(56) Entgegenhaltungen:
- EP-A2- 1 504 955
- DE-A1- 10 149 640
- DE-A1- 19 961 754
- DE-A1-102011 107 237
- US-B1- 6 287 442

## Beschreibung

Die Erfindung betrifft eine Anordnung einer Befestigungsstruktur an einem Strukturbauteil eines Kraftfahrzeuges in Form eines Kunststoff-Montageträgers zur Befestigung eines Kühlermoduls mit einem Fasereinlegeelement gemäß dem Oberbegriff des Anspruchs 1. Ein Strukturbauteil in Form eines Kunststoff-Montageträgers zur Befestigung eines Kühlermoduls im Sinne der Erfindung ist insbesondere für die Aufnahme von äußeren Kräften ausgelegt, beispielsweise weil es Teil einer crashrelevanten Zusammenbaustruktur ist. Dies sind insbesondere mit den Längsträgern, mit dem Stoßfängerquerträger oder anderen Querträgern (z.B. Fußgängerschutzquerträger) eines Kraftfahrzeuges unmittelbar oder mittelbar verbundene Kunststoff-Montageträger. Beispielhaft wird diesbezüglich auf eine Anordnung eines als Strukturbauteils dienenden, über Schottplatten mit Längsträgern eines Kraftfahrzeuges verbundenen Kunststoff-Montageträger verwiesen, insbesondere auf einen rahmenartig ausgebildeten Kunststoff-Montageträger, der zu einer Befestigung (und schützenden Aufnahme) eines Kühlermoduls dient.

Eine derartige, aus dem Stand der Technik bekannte Anordnung ist in DE 10 2011 119 542 A1 beschrieben. Bei dieser Anordnung ist der Montageträger aus Kunststoff hergestellt, und je eine Schottplatte ist rechts und links an Außenseiten eines sich in Fahrzeughochrichtung erstreckenden Rahmenteiles des Montageträgers verbunden. Details zum Werkstoff und zum strukturellen Aufbau des Kunststoff-Montageträgers sind in DE 10 2011 119 542 A1 nicht beschrieben.

Aus US 6,464,289 B2 ist ein aus Kunststoff hergestellter Montageträger bekannt, der im Bereich einer Außenfläche ein als Verstärkung dienendes Fasereinlegeelement und ein ebenfalls als Verstärkung dienendes, vollständig in den Kunststoff eingebettetes Seil umfasst.

Als Strukturbauteil dienende Montageträger mit Fasereinlegeelementen eignen sich nicht ohne Weiteres zur Befestigung von Anbauteilen, insbesondere wenn über diese Anbauteile größere Kräfte in dem Verbindungsbereich zu dem Montageträger aufnehmbar sein sollen und wenn das Anbauteil zumindest teilweise im Bereich des Fasereinlegeelements angeordnet sein soll. Unter größeren Kräften werden Kräfte von mehr als 200 N verstanden, insbesondere Kräfte in der Größenordnung von mehr als 5 kN, mehr als 10 kN oder mehr als 100 kN, wie sie im Bereich von crashrelevanten Zusammenbaustrukturen von Kraftfahrzeugen wirken. Es besteht dann die Gefahr, dass das Fasereinlegeelement und damit das gesamte Strukturbauteil schon bei geringen Kräften beschädigt wird.

Der Erfindung liegt die Aufgabe zugrunde, eine Anordnung einer Befestigungsstruktur an einem Strukturbauteil in Form eines Kunststoff-Montageträgers zur Befestigung eines Kühlermoduls eines Kraftfahrzeuges mit einem Fasereinlegeelement zur Verfügung zu stellen, welche eine Übertragung hoher Kräfte zwischen dem Strukturbauteil und einem mit dem Strukturbauteil im Bereich des Fasereinlegeelements verbundenen Anbauteil ermöglichen, ohne das Strukturbauteil zu beschädigen.

Die Lösung der Aufgabe erfolgt erfindungsgemäß mit den Merkmalen des unabhängigen Anspruchs. Weitere praktische Ausführungsformen und Vorteile der Erfindung sind in Verbindung mit den abhängigen Ansprüchen beschrieben.

Gemäß einer erfindungsgemäßen Anordnung einer Befestigungsstruktur an einem Strukturbauteil eines Kraftfahrzeuges in Form eines Kunststoff-Montageträgers zur Befestigung eines Kühlermoduls mit einem an der Oberfläche des Strukturbauteils angeordneten Fasereinlegeelement, wobei das Strukturbauteil mindestens eine Öffnung zur Festlegung eines Anbauteils mittels mindestens eines Befestigungsmittels aufweist, weist die Befestigungsstruktur eine Einleger-Anlagefläche zur flächig anliegenden Positionierung der Befestigungsstruktur an zumindest einem Teilbereich des Fasereinlegeelements auf. Dabei ist die Öffnung derart angeordnet, dass mit Hilfe des mindestens einen Befestigungsmittels die Einleger-Anlagefläche der Befestigungsstruktur an dem Fasereinlegeelement anliegend gehalten wird.

Die erfindungsgemäße Anordnung ermöglicht es, insbesondere durch den Einsatz und die beschriebene Positionierung und Fixierung der Befestigungsstruktur, ein Anbauteil an dem Strukturbauteil auf eine geeignete Weise derart festzulegen, dass im Bereich des Fasereinlegeelements hohe Kräfte zwischen dem Strukturbauteil und dem Anbauteil übertragen werden können, ohne das Strukturbauteil zu beschädigen.

Zur Befestigung der Befestigungsstruktur kann die Befestigungsstruktur eine die Einleger-Anlagefläche durchdringende Öffnung aufweisen, wobei das Befestigungsmittel das Strukturbauteil und die Befestigungsstruktur durchdringend angeordnet ist. Die Befestigungsstruktur kann auch zwei oder mehr Öffnungen aufweisen, die korrespondierend zu jeweiligen Öffnungen in der Befestigungsstruktur ausgebildet sind und für die Verwendung mehrerer, separater Befestigungsmittel verwendet werden können. Die Öffnungen in dem Strukturbauteil und/oder in der Befestigungsstruktur können vorteilhaft bereits bei der Herstellung eines Strukturbauteils eingebracht werden, insbesondere durch geeignete Berücksichtigung in einer Kunststoffspritzgießform (und sofern vorhanden, in einem Fasereinlegeelement), so dass nach dem Gießprozess keine mechanische Nachbearbeitung mehr erforderlich ist oder nur wenig Zeit beanspruchende mechanische Nachbearbeitungsschritte erforderlich sind.

Eine besonders gute Kraftübertragung wird erzielt, wenn die Einleger-Anlagefläche größer ist als die Querschnittsfläche der in dem Strukturbauteil ausgebildeten Öffnung. In diesem Fall ist eine Öffnung, welche das Fasereinlegeelement durchdringt, zumindest teilweise großflächig von dem Fasereinlegeelement umgeben, so dass eine großflächige Kraftübertragung ermöglicht wird. Vorzugsweise sind das Fasereinlegeelement und die Einleger-Anlagefläche die Öffnung vollständig umgebend ausgebildet. Als Einleger-Anlagefläche können in diesem Fall beispielsweise eine kreisringförmige Scheibe nach Art einer Unterlegscheibe, ein großflächiger Schraubenkopf oder ein anders gestaltetes Anlageelement dienen.

In einer weiteren praktischen Ausführungsform kann die Befestigungsstruktur eine von der Einleger-Anlagefläche beabstandete Stütz-Anlagefläche aufweisen. Die Stütz-Anlagefläche kann an einem von dem Einlegeelement beabstandeten Bereich des Strukturbauteils oder an einem anderen Strukturbauteil eines Kraftfahrzeuges anliegend positioniert sein. Insbesondere kann die Befestigungsstruktur dazu u-förmig oder L-förmig ausgebildet sein. Ferner kann die Befestigungsstruktur mit der Stütz-Anlagefläche an dem Anbauteil großflächig anliegend positioniert werden.

Alternativ oder in Ergänzung dazu können die Stütz-Anlagefläche und die Einleger-Anlagefläche jeweils an voneinander beabstandeten Flächen des Strukturbauteils angeordnet sein. Insbesondere kann die Befestigungsstruktur dazu c-förmig bzw. u-förmig ausgebildet sein. Insbesondere kann die Einleger-Anlagefläche an der Oberfläche des Strukturbauteils angeordnet sein, an welcher das Fasereinlegeelement angeordnet ist, und die Stütz-Anlagefläche auf einer davon beabstandeten, aber ähnlich oder gleich ausgerichteten Fläche, so dass die Stütz-Anlagefläche und die Einleger-Anlagefläche ungefähr oder exakt parallel zueinander angeordnet sind. In diesem Fall eignet sich besonders eine u-förmige Befestigungsstruktur, die mit den freien Schenkeln an den beschriebenen parallelen Flächen anliegt.

In einer weiteren praktischen Ausführungsform dient ein Anbauteil als Befestigungsstruktur, wobei die Stütz-Anlagefläche und die Einleger-Anlagefläche auf gegenüberliegenden Seiten eines eben ausgebildeten Einschubabschnitts der Befestigungsstruktur ausgebildet sind und an dem Strukturbauteil ein taschenartig ausgebildeter Aufnahmeabschnitt ausgebildet ist. Ein solcher taschenartig ausgebildeter Aufnahmeabschnitt kann sich insbesondere quer zur Einschubrichtung in Höhe und Breite derart erstrecken, dass er an die korrespondierende Höhe und Breite des Einschubabschnitts der Befestigungsstruktur angepasst ist. Der taschenartige Aufnahmeabschnitt kann als Gleitführung für das Einschieben der Befestigungsstruktur ausgebildet sein. Der Aufnahmeabschnitt kann in dem Bereich ausgebildet sein, in welchem das Fasereinlegeelement angeordnet ist, so dass die Kraftübertragung überwiegend oder vollständig im Bereich des Aufnahmeabschnitts an der Befestigungsstruktur stattfindet. In einer vorteilhaften Ausführungsvariante ist der Aufnahmeabschnitt beabstandet von der Öffnung im Strukturbauteil ausgebildet. Die Stütz-Anlagefläche kann in diesem Fall gegenüberliegend zur Einleger-Anlagefläche angeordnet sein und sich dort an dem Bereich des Strukturbauteils abstützen, in welchem kein Fasereinlegeelement angeordnet ist.

Zur Befestigung der Befestigungsstruktur und zur Festlegung des Anbauteils an dem Strukturbauteil kann als Befestigungsmittel eine kostengünstig verfügbare Mutter-Schrauben-Verbindung vorgesehen sein. Aus Montageaspekten ist es besonders bevorzugt, wenn es sich bei der Mutter um eine Blindnietmutter handelt. Die Blindnietmutter kann die Öffnung im Strukturbauteil durchragen und insbesondere durch ein Werkzeug derart montiert werden, dass ein Kragen auf jeder Seite der Öffnung ausgebildet ist. Die Blindnietmutter wird dabei bevorzugt so angeordnet, dass sie mit einem Kragen an der Einleger-Anlagefläche der Befestigungsstruktur anliegt und mit dem anderen Kragen an dem Strukturbauteil oder an der Stütz-Anlagefläche. Mittels der Schraube kann das Anbauteil dann einfach mit der Befestigungsstruktur an dem Strukturbauteil durch Verschrauben befestigt werden.

In einer weiteren praktischen und kostengünstig realisierbaren Ausführungsform ist das Befestigungselement ein mindestens zweiteiliges Schraubelement. Dabei umfasst das Schraubelement ein erstes Befestigungselement, an welchem eine Einleger-Anlagefläche ausgebildet ist, und ein zweites Befestigungselement, welches zur Verschraubung mit dem ersten Befestigungselement ausgebildet ist und eine Stütz-Anlagefläche umfasst. Das Schraubelement ist dabei ferner derart angeordnet, dass es die in dem Strukturbauteil ausgebildete Öffnung hülsenartig durchragt und mit der Einleger-Anlagefläche und der Stütz-Anlagefläche umklammert. Das zweiteilige Schraubelement bietet eine hervorragende Möglichkeit eine Einleger-Anlagefläche an einem Fasereinlegeelement zu positionieren und für größere Kraftübertragungen geeignet zu halten. Zur Montage kann insbesondere zunächst das erste Schraubelement relativ zu der Einleger-Anlagefläche derart positioniert werden, dass die Einleger-Anlagefläche großflächig auf dem Fasereinlegeelement aufliegt. An dem ersten Schraubelement kann ein hervorragender Bereich ausgebildet sein, der in die Öffnung hineinragt. Von der gegenüberliegenden Seite der Öffnung kann das zweite Schraubelement mit dem ersten Schraubelement verschraubt werden, bis die Stütz-Anlagefläche ebenfalls mit einer Fläche des Strukturbauteils zur Anlage kommt, so dass die Einleger-Anlagefläche und die Stütz-Anlagefläche das Strukturbauteil umklammern. Für die beschriebene Verschraubung ist vorzugsweise ein Innengewinde in dem ersten Befestigungselement oder in dem zweiten Befestigungselement ausgebildet und an dem jeweils anderen Befestigungselement ein korrespondierendes Außengewinde.

Durch die Verschraubung des ersten Schraubelements mit dem zweiten Schraubelement wird eine lösbare Verbindung erzeugt, die zerstörungsfrei demontierbar ist und somit einen späteren Austausch oder eine bedarfsweise Demontage und Neumontage des Anbauteils ermöglicht.

Wenn eine zerstörungsfreie Demontage nicht erforderlich ist, können das erste Schraubelement und das zweite Schraubelement auch miteinander verpresst werden.

Auch andere demontierbare oder nicht demontierbare Befestigungsmöglichkeiten sind möglich. Nur beispielhaft wird diesbezüglich auf Clip-Verbindungen verwiesen.

Zur Befestigung des ersten Befestigungselements an dem zweiten Befestigungselement und/oder zur Festlegung weiterer Befestigungselemente an den Befestigungselementen können das erste Befestigungselement und/oder das zweite Befestigungselement ein Innengewinde aufweisen.

In Verbindung mit einem ersten Befestigungselement und einem zweiten Befestigungselement, die miteinander über korrespondierende Gewinde mit einem großen Durchmesser verschraubt sind und von denen zumindest ein Befestigungselement ein Innengewinde für das Einschrauben eines weiteren Befestigungselements aufweist, hat sich eine MindestDurchmesser-Differenz von 2 mm, bevorzugt mindestens 3 mm und besonders bevorzugt mindestens 4 mm als geeignet erwiesen. Gemäß der besonders bevorzugten Variante kann dementsprechend beispielsweise ein M10 Gewinde für die Verschraubung von einem ersten Befestigungselement mit einem zweiten Befestigungselement und ein M6 Gewinde für das Einschrauben eines weiteren Befestigungselements kombiniert werden. Für eine Einleger-Anlagefläche eignet sich in diesem Fall gut ein Durchmesser von mindestens 30 mm.

Das Strukturbauteil ist ein Kunststoff-Montageträger für ein Kühlermodul. Der Kunststoff-Montageträger ist weiter vorzugsweise rahmenartig ausgebildet, entweder als offener Rahmen oder als geschlossener Rahmen, als geschlossener Rahmen insbesondere als rechteckiger Rahmen mit zwei horizontal verlaufenden Horizontalträgern und zwei vertikal verlaufenden Seitenträgern. Mittels der Befestigungsstruktur kann ein mit einem Stoßfängerquerträger (insbesondere fest, d.h. starr mit Hilfe einer stoffschlüssigen, kraftschlüssigen und/oder formschlüssigen Verbindung) verbundenes Anbauteil befestigt werden, insbesondere kann es sich bei dem Anbauteil um eine Schottplatte handeln, die an einem sich überwiegend vertikal erstreckenden Abschnitt eines rahmenartigen Montageträgers festgelegt ist.

Die Befestigungsstruktur kann aus einem metallischen oder nicht-metallischen Werkstoff ausgebildet sein, insbesondere aus Stahl, Aluminium oder aus Kunststoff, insbesondere auch aus glasfaserverstärktem Kunststoff oder aus kohlenstofffaserverstärktem Kunststoff.

Weitere praktische Ausführungsformen der Erfindung sind nachfolgend im Zusammenhang mit den Zeichnungen beschrieben.

Es zeigen:
- Fig. 1: ein Kraftfahrzeug in einer Seitenansicht,
- Fig. 2: eine Schottplatte zusammen mit weiteren, fest mit der Schottplatte verbundenen Elementen in einer perspektivischen Ansicht von schräg vorne,
- Fig. 3: eine erste Ausführungsform einer erfindungsgemäßen Anordnung in einer Schnittdarstellung,
- Fig. 4: eine zweite Ausführungsform einer erfindungsgemäßen Anordnung in einer Schnittdarstellung,
- Fig. 5: eine dritte Ausführungsform einer erfindungsgemäßen Anordnung in einer Schnittdarstellung,
- Fig. 6: eine vierte Ausführungsform einer erfindungsgemäßen Anordnung in einer Schnittdarstellung,
- Fig. 7: eine vergrößerte Ansicht des mit VII gekennzeichneten Bereichs aus Fig. 2 in einer perspektivischen Ansicht von der Seite mit einer gestrichelt dargestellten fünften Ausführungsform einer erfindungsgemäßen Anordnung,
- Fig. 8: eine sechste Ausführungsform einer erfindungsgemäßen Anordnung mit einer Befestigungsstruktur umfassend ein erstes Befestigungselement und ein zweites Befestigungselement in einer Schnittdarstellung gemäß der Linie VIII-VIII aus Fig. 2,
- Fig. 9: das erste Befestigungselement und das zweite Befestigungselement aus Fig. 8 in einer geschnittenen perspektivischen Ansicht,
- Fig. 10: das zweite Befestigungselement aus Fig. 9 in einer Draufsicht und
- Fig. 11 a-d: vier verschiedene Varianten des ersten Befestigungselements aus Fig. 9 in einer Ansicht von unten.

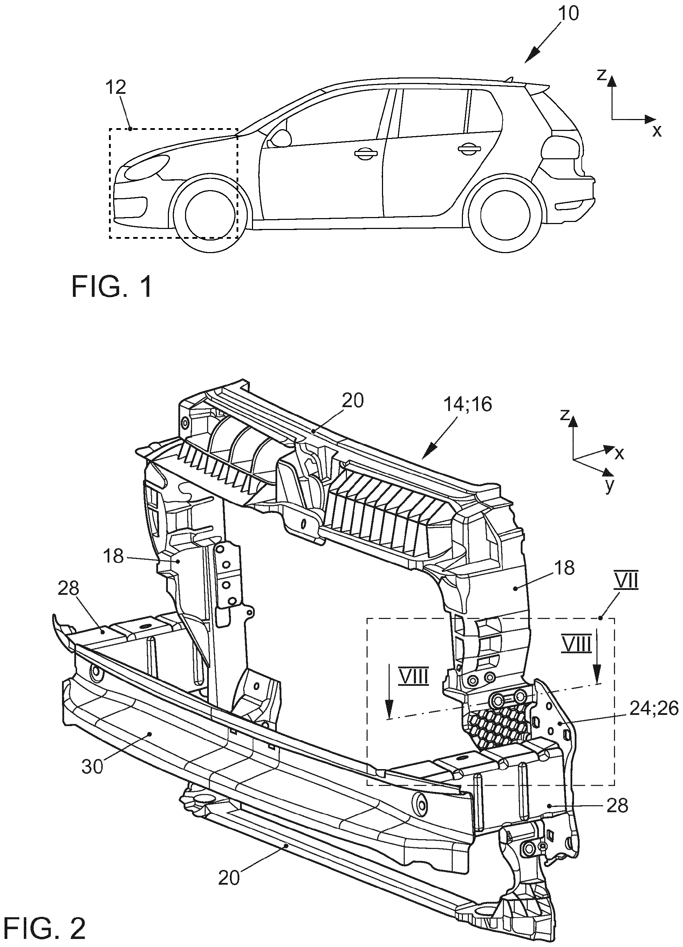

In Fig. 1 ist ein Kraftfahrzeug 10 in einer Seitenansicht dargestellt. Die im Folgenden im Detail erläuterten erfindungsgemäßen Anordnungen sind alle in einem Vorderwagen 12 dieses Kraftfahrzeugs 10 angeordnet.

In Fig. 2 ist ein als Strukturbauteil 14 dienender Kunststoff-Montageträger 16 dargestellt, der in dem Vorderwagen 12 des in Figur 1 dargestellten Kraftfahrzeuges 10 angeordnet ist. Der Kunststoff-Montageträger 16 ist als geschlossener Rahmen mit rechteckiger Grundform ausgebildet. Der Kunststoff-Montageträger 16 umfasst zwei sich überwiegend in vertikaler Richtung, d.h. in Fahrzeughochrichtung (z-Richtung), erstreckende Seitenträger 18 und zwei sich überwiegend in horizontaler Richtung, vorliegend in Fahrzeugquerrichtung (in y-Richtung), erstreckende Horizontalträger 20.

Mit den Seitenträgern 18 fest verbunden ist jeweils eine Schottplatte 26 (in Figur 2 über zwei angedeutete Schrauben in dem Bereich der Schnittlinie VIII-VIII). In Fahrzeuglängsrichtung betrachtet hinter der Schottplatte 26 schließt sich ein nicht dargestellter Längsträger des Kraftfahrzeuges 10 an. In Fahrzeuglängsrichtung betrachtet vor den Schottplatten 26 ist in bekannter Art und Weise jeweils ein Deformationselement 28 als Verbindungselement zu einem Stoßfängerquerträger 30 angeordnet. Die Schottplatten 26 bilden zusammen mit den Deformationselementen 28 und dem Stoßfängerquerträger 30 eine Crashstruktur, welche zur Aufnahme hoher Kräfte dient, insbesondere im Falle einer Fahrzeugkollision.

Im Folgenden werden verschiedene Ausführungsformen einer erfindungsgemäßen Anordnung beschrieben, gemäß welchen als Anbauteil 24 dienende Schottplatten 26 an einem Strukturbauteil 14, hier in Form eines Kunststoff-Montageträgers 16 vorteilhaft anordenbar ist, und zwar insbesondere dann, wenn im Bereich der Anbindung zwischen Schottplatten 26 und Kunststoff-Montageträger 16 ein Fasereinlegeelement 22 angeordnet ist. Die Kunststoff-Montageträger 16 der im Folgenden beschriebenen Anordnungen erstrecken sich alle über einen Großteil der Breite des Vorderwagens 12, d.h. über mindestens 50 Prozent der Breite des Kraftfahrzeuges 10.

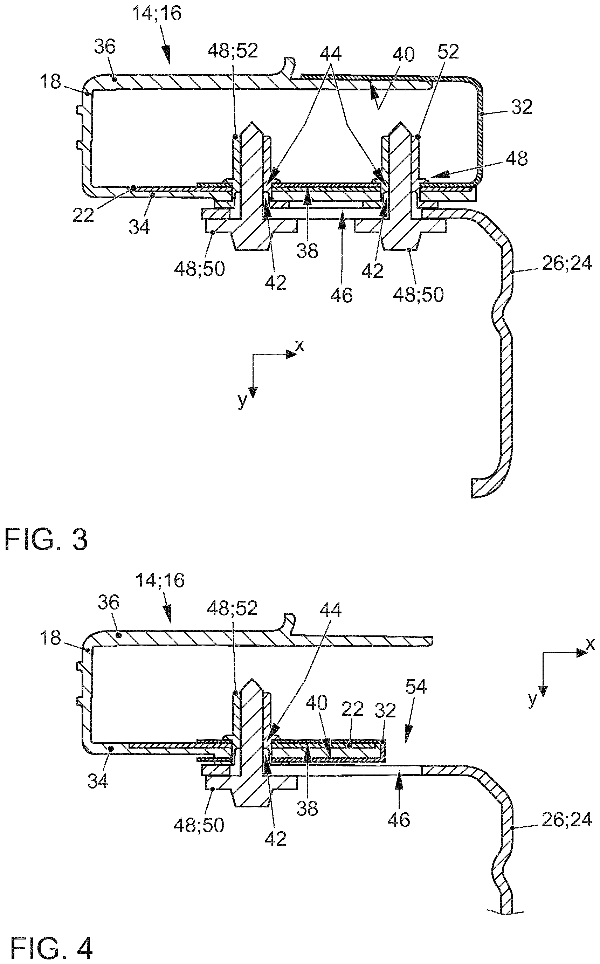

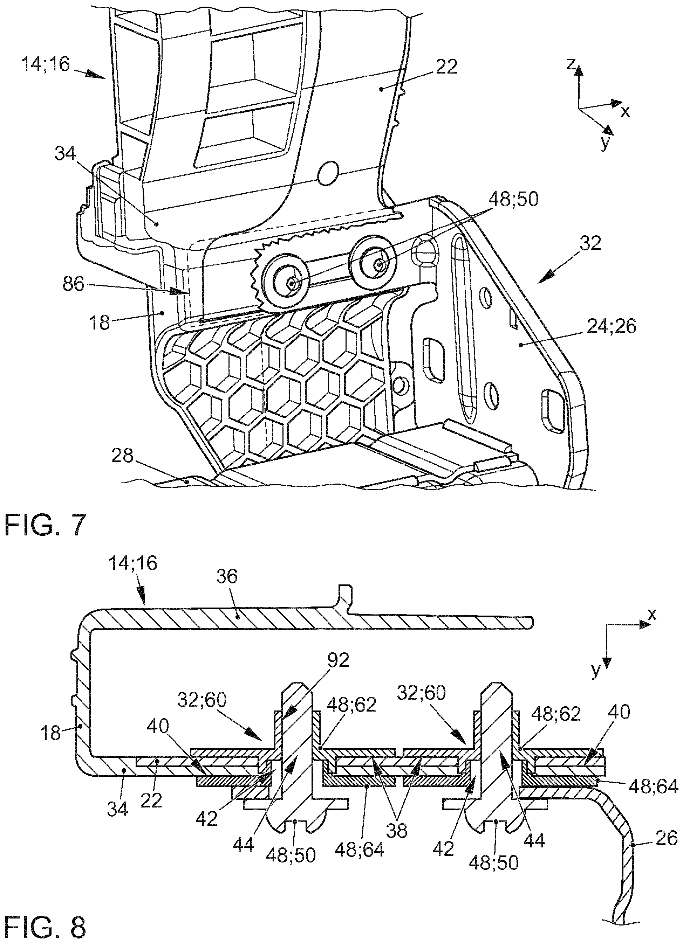

Figur 8 zeigt eine Schnittdarstellung durch den Kunststoff-Montageträger 16 gemäß der Linie VIII-VIII in Figur 2. Die Figuren 3-6 zeigen analoge Schnittdarstellungen in Verbindung mit anderen erfindungsgemäßen Anordnungen, bei welchen teilweise auch die Gestaltung der Seitenträger 18 der Kunststoff-Montageträger 16 variiert.

Wie aus den Figuren 3-6 und 8 ersichtlich ist, weist der Kunststoff-Montageträger 16 bei allen Ausführungsformen jeweils im Bereich der Seitenträger 18 eine u-förmige Querschnittsform auf, wobei die Schenkel des "u" durch einen - in Fahrzeugquerrichtung (y-Richtung) betrachtet - näher an der Fahrzeugmittelachse liegenden, inneren Schenkel 36 und durch einen in Fahrzeugquerrichtung weiter zur Fahrzeugaußenseite orientierten, äußeren Schenkel 34 gebildet sind. Die offene Seite des "u" weist - in Fahrzeuglängsrichtung (x-Richtung) betrachtet - nach hinten.

Es wird nun zunächst anhand von Figur 3 eine erste Ausführungsform einer erfindungsgemäßen Anordnung beschrieben, bevor im Anschluss daran in Verbindung mit den übrigen Figuren weitere Ausführungsformen beschrieben werden. Für identische oder zumindest funktionsgleiche Bauteile werden dabei in allen Ausführungsformen die gleichen Bezugszeichen verwendet.

An den zur Fahrzeuglängsmittelachse orientierten, sich in Fahrzeuglängsrichtung und in Fahrzeughochrichtung erstreckenden Oberflächen der äußeren Schenkel 36 der u-förmig gestalteten Seitenträger 18 des Kunststoff-Montageträgers 16 ist jeweils zumindest in einem Teilbereich ein Fasereinlegeelement 22 angeordnet. Das Fasereinlegeelement 22 erstreckt sich aus dem geschnitten dargestellten Bereich insbesondere in Fahrzeughochrichtung (z-Richtung) nach oben in Richtung des oberen Horizontalträgers 20.

Für die Realisierung einer erfindungsgemäßen Anordnung wird eine separate Befestigungsstruktur 32 verwendet. Die Befestigungsstruktur 32 umfasst in allen Ausführungsformen eine Einleger-Anlagefläche 38, die flächig an einem Teilbereich des Fasereinlegeelements 22 anliegt. In der in Figur 3 gezeigten Ausführungsform umfasst die Befestigungsstruktur 32 ferner eine Stütz-Anlagefläche 40, mit welcher die Befestigungsstruktur 32 flächig an dem zweiten Schenkel 36 des Seitenträgers 18 anliegt, wodurch sich durch den Seitenträger 18 und die Befestigungsstruktur 32 in der Schnittebene ein geschlossenes Querschnittsprofil ergibt.

Der Seitenträger 18 weist zwei Durchgangsöffnungen 42 auf, welche sich in der in Fig. 3 gezeigten Ausführungsform auch durch das Fasereinlegeelement 22 erstrecken. Die Einleger-Anlagefläche 38 der Befestigungsstruktur 32 weist ebenfalls zwei Durchgangsöffnungen 44 auf, wobei diese Öffnungen 44 jeweils miteinander fluchtend angeordnet sind. In der Schottplatte 26 ist ein Langloch 46 ausgebildet. Die Schottplatte 26 ist derart angeordnet, dass durch die Durchgangsöffnungen 42, 44 in der Befestigungsstruktur 32 und in dem Seitenträger 18 hindurchführende Befestigungsmittel 48, auch durch das Langloch 46 führen. Die Schottplatte 26 ist mittels als Befestigungsmittel 48 dienender Schrauben 50 und Muttern 52 festgelegt. Im vorliegenden Fall sind die Muttern 52 als Blindnietmuttern ausgebildet, wodurch bei der Montage der Blindnietmuttern bereits die Befestigungsstruktur 32 und der Seitenträger 18 relativ zueinander vorpositioniert werden, so dass für die Montage der Schottplatten 26 nur noch die Schottplatten 26 relativ zu dem Kunststoff-Montageträger 16 ausgerichtet werden müssen und die Schrauben 50 anschließend in die bereits vorfixierten Muttern 52 eingedreht werden müssen.

Fig. 4 zeigt eine zweite Ausführungsform einer erfindungsgemäßen Anordnung, gemäß welcher die Befestigungsstruktur 32 den äußeren Schenkel 34 umklammernd ausgebildet und angeordnet ist. Die Befestigungsstruktur 32 weist in dieser Ausführungsform ebenfalls eine Einleger-Anlagefläche 38 und eine Stütz-Anlagefläche 40 auf. Die Stütz-Anlagefläche 40 und die Einleger-Anlagefläche 38 umschließen hier den ersten Schenkel u-förmig derart, dass auch die in der Befestigungsstruktur 32 ausgebildeten Durchgangsöffnungen 44 beidseitig des ersten Schenkels 34 und der darin gebildeten Durchgangsöffnung 42 angeordnet sind. Die Befestigungsstruktur 32 bildet damit beidseitig für die als Blindnietmutter ausgebildete Mutter 52 eine Anlagefläche, so dass Kräfte der Blindnietmutter und der in diese eingedrehten Schraube 50 nicht unmittelbar in das Strukturbauteil 14 geleitet werden, sondern nur mittelbar und großflächig über die diese schützend umklammernde Befestigungsstruktur 32.

Die Befestigung der Schottplatten 26 erfolgt wiederum über ein in diesen ausgebildetes Langloch 46, wie in Verbindung mit Fig. 3 beschrieben. In dieser Ausführungsform erfolgt die Befestigung allerdings mit nur einer Schraube 50 und einer als Blindnietmutter ausgebildeten Mutter 52.

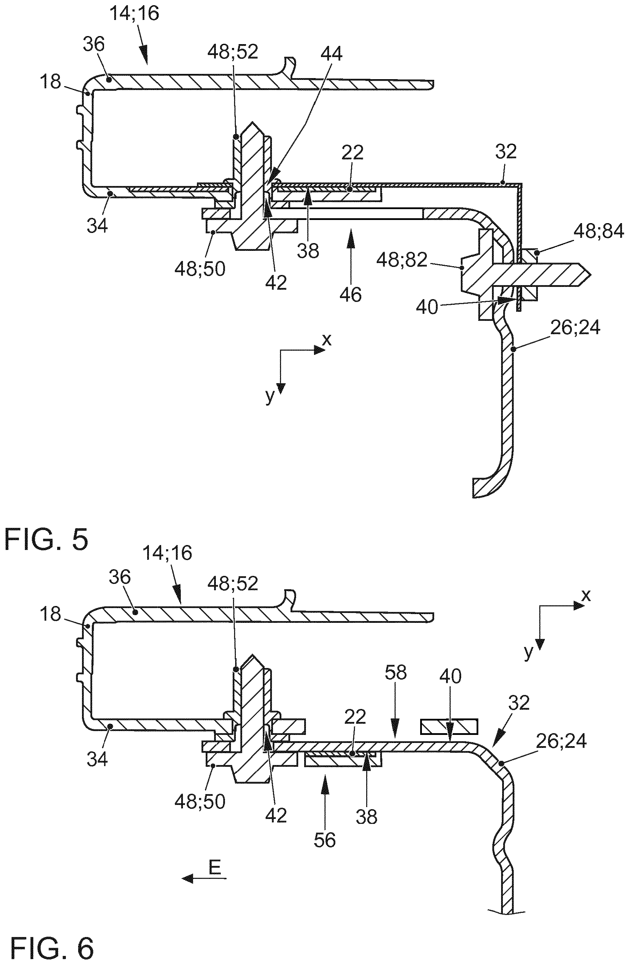

In Fig. 5 ist eine dritte Ausführungsform einer erfindungsgemäßen Anordnung dargestellt.

In dieser dritten Ausführungsform ist die Befestigungsstruktur 32 als L-förmiges Winkelelement ausgebildet, das in seiner Form und Ausrichtung an die Grundform der Schottplatte 26 angepasst ist. An einem von dem Seitenträger 18 wegführenden, in Fahrzeugquerrichtung orientierten Abschnitt stützt sich die Befestigungsstruktur 32 mit einer Stütz-Anlagefläche 40 an einem parallel verlaufenden Abschnitt der Schottplatte 26 ab. Mit einer in Fahrzeuglängsrichtung orientierten Einleger-Anlagefläche 38 stützt sich die Befestigungsstruktur 32 wiederum an dem ersten Schenkel 34 - auch in dem Bereich des Fasereinlegeelements 22 ab. Die Schottplatte 26 ist wiederum, wie oben beschrieben, mittels einer Schraube 50 und einer Mutter 52 als Befestigungsmittel 48 mit dem Seitenträger 18 verbunden. Ferner ist die Schottplatte 26 mit der Befestigungsstruktur 32 über die Stütz-Anlagefläche 40 mittels einer weiteren Schraube 82 und einer weiteren, als Befestigungsmittel 48 dienenden Mutter 84 fest verbunden.

Fig. 6 zeigt eine vierte Ausführungsform einer erfindungsgemäßen Anordnung. Bei dieser Anordnung ist an dem Seitenträger 18 des Kunststoff-Montageträgers 16 ein taschenartiger Aufnahmeabschnitt 56 ausgebildet. Das Anbauteil 24, hier die Schottplatte 26, dient bei dieser Ausführungsform selbst als Befestigungsstruktur 32. Dazu weist die als Befestigungsstruktur 32 dienende Schottplatte 26 bzw. die Befestigungsstruktur 32 einen Einschubabschnitt 58 auf, der nach Einschieben der Schottplatte 26 in Richtung des Pfeils E in dem taschenartigen Aufnahmeabschnitt 56 zur Anlage gelangt. Das Fasereinlegeelement 22 ist im Bereich des Aufnahmeabschnitts 56 angeordnet, so dass der Einschubabschnitt 58 eine Einleger-Anlagefläche 38 aufweist. Auf der gegenüberliegenden Seite der Einleger-Anlagefläche 38 weist der Einschubabschnitt 58 eine Stütz-Anlagefläche 40 auf, die sich an dem äußeren Schenkel 34 des Seitenträgers 18 abstützt. Wie vorstehend beschrieben, dienen eine Mutter 52 und eine Schraube 50 als Befestigungsmittel 48. Bei dieser vierten Ausführungsform ist das Fasereinlegeelement 22 nicht im Bereich der Öffnung 42 angeordnet, so dass die Mutter 52 von beiden Seiten nur den Seitenträger 18 im Bereich der Öffnung 42 überragt. Die Kraftübertragung zwischen dem Fasereinlegeelement 22 und der Befestigungsstruktur 32 erfolgt im Bereich des Aufnahmeabschnitts 56.

Fig. 7 zeigt den in Fig. 2 mit VII gekennzeichneten Abschnitt einer fünften Ausführungsform einer erfindungsgemäßen Anordnung. Abweichend zu den vorstehend beschriebenen Anordnungen ist bei dieser Ausführungsform ein Fasereinlegeelement 22 auf der zur Fahrzeugaußenseite gerichteten Oberfläche des äußeren Schenkels 34 des Strukturbauteils 14 angeordnet. Als Befestigungsstruktur 32 dient hier-wie bei der in Verbindung mit Fig. 6 beschriebenen Ausführungsform - die Schottplatte 26. Um das Fasereinlegeelement 22 sichtbar zu machen, ist die an der Schottplatte 26 ausgebildete Einleger-Anlagefläche 38 teilweise ausgeschnitten dargestellt. Die Schottplatte 26 weist in einem parallel zu dem äußeren Schenkel 34 ausgebildeten Abschnitt eine in Figur 7 nur gestrichelt dargestellte Einleger-Anlagefläche 38 auf, welche das Fasereinlegeelement 22 in Fahrzeuglängsrichtung betrachtet vollflächig überdeckt, so dass die sich in Fahrzeughochrichtung (z-Richtung) erstreckende Vorderkante 86 nicht an das Fasereinlegeelement 22 angrenzt. Dadurch wird einer mechanischen Beschädigung des Fasereinlegeelements 22 in dem Bereich der Vorderkante 86 entgegengewirkt.

In Verbindung mit den Fig. 8-11 wird im Folgenden eine sechste Ausführungsform einer erfindungsgemäßen Anordnung beschrieben. Bei dieser Ausführungsform dient als Befestigungsstruktur 32 zur Befestigung der Schottplatte 26 an dem Seitenträger 18 des Kunststoff-Montageträgers 16 ein zweiteiliges Schraubelement 60 mit einem ersten Befestigungselement 62 und einem zweiten Befestigungselement 64. Diese Befestigungselemente 62, 64 werden so miteinander verschraubt, dass eine an dem ersten Befestigungselement 62 ausgebildete Einleger-Anlagefläche 38 und eine an dem zweiten Befestigungselement ausgebildete Stütz-Anlagefläche 40 sich beim Verschrauben der Elemente aufeinander zubewegen, um sich umklammernd um den äußeren Schenkel 34 zu legen. Im montierten Zustand liegt die Einleger-Anlagefläche 38 - wie aus Fig. 8 ersichtlich - an dem äußeren Schenkel 34 im Bereich des Fasereinlegeelements 22 an, und die Stütz-Anlagefläche 40 liegt an der gegenüberliegenden Seite des äußeren Schenkels 34 an.

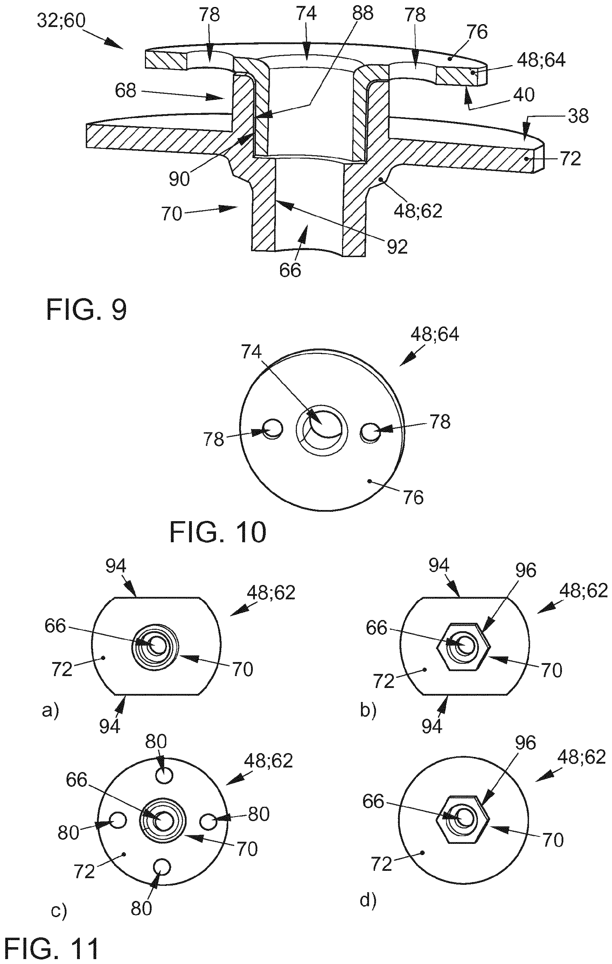

In Figur 9 ist das zweiteilige Schraubelement 60 ohne weitere Elemente in einer geschnittenen und perspektivischen Darstellung gezeigt. Zur Verschraubung mit in dem Strukturbauteil 14 ausgebildeten Öffnungen 44 (vgl. Figur 8) sind an den ersten Befestigungselementen 62 jeweils ein in den übrigen Zeichnungen nicht dargestelltes Innengewinde 88 ausgebildet, das mit jeweils einem an dem zweiten Befestigungselement 64 ausgebildeten, in den übrigen Zeichnungen nicht dargestellten Außengewinde 90 zusammenwirkt (vgl. Fig. 9).

Das erste Befestigungselement 62 weist eine Durchgangsöffnung 66 auf. Die Durchgangsöffnung 66 weist in einem oberen Abschnitt 68 einen größeren Durchmesser auf als in einem unteren Abschnitt 70.

Um eine großflächige Einleger-Anlagefläche 38 bzw. eine großflächige Stütz-Anlagefläche 40 an dem ersten Befestigungselement 62 bzw. an dem zweiten Befestigungselement 64 bereitzustellen, sind jeweils kragenartige Abschnitte 72, 76 an diesen Befestigungselementen 62, 64 ausgebildet.

In dem unteren Abschnitt 70 der in dem zweiten Befestigungselement 64 ausgebildeten Öffnung ist ein Innengewinde 92 ausgebildet, um mit einer als Befestigungsmittel 48 dienenden Schraube 50 mit korrespondierendem Außengewinde zusammenwirken zu können (vgl. Fig. 8).

Um ein Drehmoment mittels eines Werkzeuges auf das erste Befestigungselement 62 übertragen zu können, sind bei der in den Figuren 8, 9 und 11a sowie 11b gezeigten Ausführungsformen im Bereich des kragenartig ausgebildeten Abschnitts 72 Abflachungen 94 für den Angriff eines Schraubenschlüssels und/oder einer Zange bzw. eines anderen geeigneten Werkzeuges vorgesehen.

Bei der in Fig. 11b gezeigten Ausführungsform weist der halsartig ausgebildete, untere Abschnitt 70 zusätzlich eine Sechskantgeometrie 96 für den Angriff eines Schraubenschlüssels auf.

Bei der in Fig. 11d gezeigten Ausführungsform ist nur eine Sechskantgeometrie 96 ausgebildet, und es wurde auf Abflachungen verzichtet.

Alternativ oder in Ergänzung können - wie in Fig. 11c dargestellt - Vertiefungen oder Durchgangsöffnungen 80 im Bereich eines kragenartigen Abschnitts 72 ausgebildet sein.

Wie in den Fig. 9 und 10 erkennbar, sind in dem kragenartigen Abschnitt 76 des zweiten Befestigungselements 64 - analog zu der in Fig. 11c gezeigten Ausführungsform des ersten Befestigungselements 62 - Durchgangsöffnungen 78 ausgebildet. Alternativ können auch hier nur Vertiefungen ausgebildet sein. In die Öffnungen 78, 80 bzw. Vertiefungen (nicht dargestellt) kann beispielsweise mit einem stabartigen Werkzeug eingegriffen werden, um ein Drehmoment auf die Befestigungselemente 62, 64 zu übertragen und diese miteinander zu verschrauben.

Zur Befestigung der Schottplatte 26 an dem Kunststoff-Montageträger 16 sind in dem Seitenträger 18 zwei durchragende Öffnungen 42 ausgebildet. Zur Befestigung der Schottplatte 26 werden dann zunächst die zweiteiligen Schraubelemente 60 derart mit dem Kunststoff-Montageträger 16 verbunden, dass diese die Öffnungen 42 hülsenartig durchragen und somit den äußeren Schenkel 34 großflächig umklammern. Die Schottplatte 26 wird anschließend mit je einer als Befestigungsmittel 48 dienenden Schraube 50 verbunden. Dabei wirken die Schrauben 50 mit dem in dem ersten Befestigungselement 62 ausgebildeten Innengewinde 92 zusammen.

Die Befestigungsstrukturen 32 sind in allen vorliegend beschriebenen Ausführungsformen aus einem metallischen Werkstoff hergestellt, insbesondere aus Stahl. Sie können jedoch auch aus anderen geeigneten Werkstoffen hergestellt sein.

Die in der vorliegenden Beschreibung, in den Zeichnungen sowie in den Ansprüchen offenbarten Merkmale der Erfindung können sowohl einzeln als auch in beliebigen Kombinationen für die Verwirklichung der Erfindung in ihren verschiedenen Ausführungsformen wesentlich sein. Die Erfindung kann im Rahmen der Ansprüche und unter Berücksichtigung der Kenntnisse des zuständigen Fachmanns variiert werden. Insbesondere wird in diesem Zusammenhang auf Folgende Varianten verwiesen:
- Die Erfindung ist nicht auf die in Verbindung mit den Figuren 3-6 und 8 beschriebene Querschnittsform von Kunststoff-Montageträgern 16 oder auf Seitenträger 18 von Kunststoff-Montageträgern 16 beschränkt. Sie kann auch mit anderen Querschnittsformen realisiert werden.
- Die Erfindung ist nicht auf Befestigungsstrukturen 32 beschränkt, bei welchen ein oder mehrere Durchgangsöffnungen 42, 44 durch ein Fasereinlegeelement 22 führen. Sie kann auch in Verbindung mit Befestigungsstrukturen 32 ohne Durchgangsöffnungen 42, 44 realisiert werden oder in Verbindung mit Befestigungsstrukturen 32, bei welchen Durchgangsöffnungen 42, 44 beabstandet zu einem Fasereinlegeelement 22 ausgebildet sind.

### Bezugszeichenliste

- 10: Kraftfahrzeug
- 12: Vorderwagen
- 14: Strukturbauteil
- 16: Kunststoff-Montageträger
- 18: Seitenträger
- 20: Horizontalträger
- 22: Fasereinlegeelement
- 24: Anbauteil
- 26: Schottplatte
- 28: Deformationselement
- 30: Stoßfängerquerträger
- 32: Befestigungsstruktur
- 34: äußerer Schenkel (des Seitenträgers)
- 36: innerer Schenkel (des Seitenträgers)
- 38: Einleger-Anlagefläche
- 40: Stütz-Anlagefläche
- 42: Öffnung (in dem Seitenträger)
- 44: Öffnung (in der Befestigungsstruktur)
- 46: Langloch (in der Schottplatte)
- 48: Befestigungsmittel
- 50: Schraube
- 52: Mutter (Blindnietmutter)
- 54: Durchführöffnung
- 56: Aufnahmeabschnitt
- 58: Einschubabschnitt
- 60: zweiteiliges Schraubelement
- 62: erstes Befestigungselement
- 64: zweites Befestigungselement
- 66: Öffnung (des ersten Befestigungselements)
- 68: oberer Abschnitt (des ersten Befestigungselements)
- 70: unterer Abschnitt (des ersten Befestigungselements)
- 72: kragenartiger Abschnitt (des ersten Befestigungselements)
- 74: Öffnung (des zweiten Befestigungselements)
- 76: kragenartiger Abschnitt (des zweiten Befestigungselements)
- 78: Öffnung (im kragenartigen Abschnitt 76)
- 80: Öffnung (im kragenartigen Abschnitt 72)
- 82: Schraube
- 84: Mutter
- 86: Vorderkante
- 88: Innengewinde
- 90: Außengewinde
- 92: Innengewinde (des ersten Befestigungselements 62)
- 94: Abflachung
- 96: Sechskantgeometrie

## Patentansprüche

1. Anordnung einer Befestigungsstruktur (32) an einem Strukturbauteil (14) eines Kraftfahrzeuges (10) in Form eines Kunststoff-Montageträgers (16) zur Befestigung eines Kühlermoduls mit einem an einer Oberfläche des Strukturbauteils (14) angeordneten Fasereinlegeelement (22), wobei das Strukturbauteil (14) mindestens eine Öffnung (42) zur Festlegung eines Anbauteils (24) mittels mindestens eines Befestigungsmittels (48) aufweist, **dadurch gekennzeichnet, dass** die Befestigungsstruktur (32) eine Einleger-Anlagefläche (38) zur flächig anliegenden Positionierung der Befestigungsstruktur (32) an zumindest einem Teilbereich des Fasereinlegeelements (22) aufweist und die Öffnung (42) derart angeordnet ist, dass mit Hilfe des mindestens einen Befestigungsmittels (48) die Einleger-Anlagefläche (38)der Befestigungsstruktur (32) an dem Fasereinlegeelement (22) anliegend gehalten wird.

2. Anordnung nach dem vorstehenden Anspruch, **dadurch gekennzeichnet, dass** die Befestigungsstruktur (32) eine die Einleger-Anlagefläche (38) durchdringende Öffnung (44) aufweist und das Befestigungsmittel (48) das Strukturbauteil (14) und die Befestigungsstruktur (32) durchdringend angeordnet ist.

3. Anordnung nach einem oder mehreren der vorstehenden Ansprüche, **dadurch gekennzeichnet, dass** die Einleger-Anlagefläche (38) größer ist als die Querschnittsfläche der in dem Strukturbauteil (14) ausgebildeten Öffnung (42).

4. Anordnung nach einem oder mehreren der vorstehenden Ansprüche, **dadurch gekennzeichnet, dass** die Befestigungsstruktur (32) eine von der Einleger-Anlagefläche (38) beabstandete Stütz-Anlagefläche (40) aufweist, wobei die Stütz-Anlagefläche (40) an einem von dem Fasereinlegeelement (22) beabstandeten Bereich des Strukturbauteils (14) oder an einem anderen Strukturbauteil eines Kraftfahrzeuges (10) anliegend positioniert ist.

5. Anordnung nach dem vorstehenden Anspruch, **dadurch gekennzeichnet, dass** die Stütz-Anlagefläche (40) und die Einleger-Anlagefläche (38) jeweils an voneinander beabstandeten Flächen des Strukturbauteils (14) angeordnet sind.

6. Anordnung nach einem der beiden vorstehenden Ansprüche, **dadurch gekennzeichnet, dass** ein Anbauteil (24) als Befestigungsstruktur (32) dient und die Stütz-Anlagefläche (40) und die Einleger-Anlagefläche (38) auf gegenüberliegenden Seiten eines eben ausgebildeten Einschubabschnitts (58) der Befestigungsstruktur (32) ausgebildet sind und an dem Strukturbauteil (14) ein taschenartig ausgebildeter Aufnahmeabschnitt (56) ausgebildet ist.

7. Anordnung nach einem oder mehreren der vorstehenden Ansprüche, **dadurch gekennzeichnet, dass** als Befestigungsmittel (48) zur Befestigung der Befestigungsstruktur (32) eine Mutter-Schrauben-Verbindung vorgesehen ist.

8. Anordnung nach einem oder mehreren der vorstehenden Ansprüche, **dadurch gekennzeichnet, dass** die Befestigungsstruktur (32) ein mindestens zweiteiliges Schraubelement (60) mit einem ersten Befestigungselement (62) umfasst, an welchem die Einleger-Anlagefläche (38) ausgebildet ist, und mit einem zweiten Befestigungselement (64), welches zur Verschraubung mit dem ersten Befestigungselement (62) ausgebildet ist und eine Stütz-Anlagefläche (40) umfasst, wobei das Schraubelement (60) derart angeordnet ist, dass es die in dem Strukturbauteil (14) ausgebildete Öffnung (42) hülsenartig durchragt und mit der Einleger-Anlagefläche (38) und der Stütz-Anlagefläche (40) umklammert.

9. Anordnung nach dem vorstehenden Anspruch, **dadurch gekennzeichnet, dass** in dem ersten Befestigungselement (62) und/oder in dem zweiten Befestigungselement (64) ein Innengewinde ausgebildet ist.

10. Anordnung nach einem oder mehreren der vorstehenden Ansprüche, **dadurch gekennzeichnet, dass** das Strukturbauteil (14) ein Kunststoff-Montageträger (16) für ein Kühlermodul ist und mittels der Befestigungsstruktur (32) ein fest mit einem Stoßfängerquerträger (30) verbundenes Anbauteil (24) befestigt ist.

## Claims

1. Arrangement of a fastening structure (32) on a structural component (14) of a motor vehicle (10), in the form of a plastic mounting support (16) for fastening a radiator module, with a fiber inlay element (22) arranged on a surface of the structural component (14), wherein the structural component (14) has at least one opening (42) for fixing an attachment (24) by means of at least one fastening means (48), **characterized in that** the fastening structure (32) has an inlay placement surface (38) for the positioning of the fastening structure (32) bearing flat against at least a partial region of the fiber inlay element (22), and the opening (42) is arranged such that the inlay placement surface (38) of the fastening structure (32) is held bearing against the fiber inlay element (22) with the aid of the at least one fastening means (48).

2. Arrangement according to the preceding claim, **characterized in that** the fastening structure (32) has an opening (44) penetrating the inlay placement surface (38), and the fastening means (48) is arranged penetrating the structural component (14) and the fastening structure (32).

3. Arrangement according to one or more of the preceding claims, **characterized in that** the inlay placement surface (38) is larger than the cross-sectional area of the opening (42) formed in the structural component (14).

4. Arrangement according to one or more of the preceding claims, **characterized in that** the fastening structure (32) has a support placement surface (40) spaced apart from the inlay placement surface (38), wherein the support placement surface (40) is positioned bearing against a region of the structural component (14), said region being spaced apart from the fiber inlay element (22), or bearing against a different structural component of a motor vehicle (10).

5. Arrangement according to the preceding claim, **characterized in that** the support placement surface (40) and the inlay placement surface (38) are respectively arranged on surfaces of the structural component (14) that are spaced apart from one another.

6. Arrangement according to one of the two preceding claims, **characterized in that** an attachment (24) serves as a fastening structure (32), and the support placement surface (40) and the inlay placement surface (38) are formed on opposite sides of a planar insertion segment (58) of the fastening structure (32), and a pocket-like receiving segment (56) is formed in the structural component (14).

7. Arrangement according to one or more of the preceding claims, **characterized in that** a nut-and-bolt connection is provided as a fastening means (48) for fastening the fastening structure (32).

8. Arrangement according to one or more of the preceding claims, **characterized in that** the fastening structure (32) comprises an at least two-part screw element (60) with a first fastening element (62), on which the inlay placement surface (38) is formed, and with a second fastening element (64) which is designed to be screwed together with the first fastening element (62) and comprises a support placement surface (40), wherein the screw element (60) is arranged in such a way that it projects in the manner of a bushing through the opening (42) formed in the structural component (14) and clasps it with the inlay placement surface (38) and the support placement surface (40).

9. Arrangement according to the preceding claim, **characterized in that** an internal thread is formed in the first fastening element (62) and/or in the second fastening element (64).

10. Arrangement according to one or more of the preceding claims, **characterized in that** the structural component (14) is a plastic mounting support (16) for a radiator module, and an attachment (24) firmly connected to a bumper cross member (30) is fastened by means of the fastening structure (32).

## Revendications

1. Agencement d'une structure de fixation (32) sur un élément structural (14) d'un véhicule automobile (10) sous la forme d'un support de tableau de bord en plastique (16), destinée à la fixation d'un module de radiateur, avec un élément d'insertion à base de fibres (22) disposé sur une surface de l'élément structural (14), l'élément structural (14) présentant au moins une ouverture (42) pour le blocage d'une pièce à ajouter (24) au moyen d'au moins un moyen de fixation (48), **caractérisé en ce que** la structure de fixation (32) présente une surface de contact pour organe d'insertion (38) pour le positionnement à plat de la structure de fixation (32) sur au moins une partie de l'élément d'insertion à base de fibres (22) et l'ouverture (42) est disposée de telle manière que, à l'aide de l'au moins un moyen de fixation (48), la surface de contact pour organe d'insertion (38) de la structure de fixation (32) est maintenue de manière à s'appliquer contre l'élément d'insertion à base de fibres (22).

2. Agencement selon la revendication précédente, **caractérisé en ce que** la structure de fixation (32) présente une ouverture (44) traversant la surface de contact pour organe d'insertion (38) et le moyen de fixation (48) est disposé de manière à traverser l'élément structural (14) et la structure de fixation (32).

3. Agencement selon l'une ou plusieurs des revendications précédentes, **caractérisé en ce que** la surface de contact pour organe d'insertion (38) est plus grande que l'aire de la section transversale de l'ouverture (42) réalisée dans l'élément structural (14).

4. Agencement selon l'une ou plusieurs des revendications précédentes, **caractérisé en ce que** la structure de fixation (32) présente une surface de contact d'appui (40) espacée de la surface de contact pour organe d'insertion (38), la surface de contact d'appui (40) étant positionnée de manière à s'appliquer contre une zone de l'élément structural (14) espacée de l'élément d'insertion à base de fibres (22) ou contre un autre élément structural d'un véhicule automobile (10).

5. Agencement selon la revendication précédente, **caractérisé en ce que** la surface de contact d'appui (40) et la surface de contact pour organe d'insertion (38) sont disposées respectivement sur des surfaces espacées l'une de l'autre de l'élément structural (14).

6. Agencement selon l'une des deux revendications précédentes, **caractérisé en ce qu'**une pièce à ajouter (24) sert de structure de fixation (32) et la surface de contact d'appui (40) et la surface de contact pour organe d'insertion (38) sont réalisées sur des côtés opposés d'une partie enfichable (58) réalisée plane de la structure de fixation (32) et une partie de réception (56) réalisée en forme de poche est réalisée sur l'élément structural (14).

7. Agencement selon l'une ou plusieurs des revendications précédentes, **caractérisé en ce qu'**un assemblage écrou-vis est prévu comme moyen de fixation (48) pour la fixation de la structure de fixation (32).

8. Agencement selon l'une ou plusieurs des revendications précédentes, **caractérisé en ce que** la structure de fixation (32) comprend un élément à visser (60) au moins en deux parties muni d'un premier élément de fixation (62), sur lequel est réalisée la surface de contact pour organe d'insertion (38), et d'un second élément de fixation (64), qui est conçu pour être vissé avec le premier élément de fixation (62) et comprend une surface de contact d'appui (40), l'élément à visser (60) étant disposé de telle manière qu'il dépasse à la façon d'un manchon dans l'ouverture (42) réalisée dans l'élément structural (14) et l'enserre avec la surface de contact pour organe d'insertion (38) et la surface de contact d'appui (40).

9. Agencement selon la revendication précédente, **caractérisé en ce qu'**un filetage interne est réalisé dans le premier élément de fixation (62) et/ou dans le second élément de fixation (64).

10. Agencement selon l'une ou plusieurs des revendications précédentes, **caractérisé en ce que** l'élément structural (14) est un support de tableau de bord en plastique (16) pour un module de radiateur et une pièce à ajouter (24) reliée fixement à une traverse de pare-chocs (30) est fixée au moyen de la structure de fixation (32).
